# EUROPEAN PATENT APPLICATION

(11) **EP 4 763 669 A1**
(43) Date of publication of application: **24.06.2026**
(21) Application number: 24221240.5
(22) Date of filing: 18.12.2024
(51) Int. Cl.: B62D 5/04, B62D 1/00

(54) **STEERING SYSTEM AND VEHICLE ASSOCIATED**

(71) Applicant: VOLVO TRUCK CORPORATION, 405 08 Göteborg (SE)
(72) Inventor: SVENSSON, Jan-Inge, 416 78 GÖTEBORG (SE); ÖST, David, 413 27 GÖTEBORG (SE); AXELSSON, Stefan, 426 69 VÄSTRA FRÖLUNDA (SE)
(74) Representative: Lavoix

(57) **Abstract**

A steering system (7) of a vehicle (1) comprising a steer wheel (9) rotated by a driver to generate a driver torque input, an assistance steer system (11) generating an assist torque input to correct the driver torque input, and a power system (15) steering driving wheels (4) according to a control torque instruction determined from a linear function of the driver torque input and of the assist torque input. An absolute value of the assist torque input is limited by a dynamic limitation defining a base limit and a maximum limit superior to the base limit. The absolute value of the assist torque input is maintained below or equal to the maximum limit. Between the base limit and the maximum limit, a torque increase rate of the absolute value of the assist torque input is limited. Below the base limit, there is no limitation on the torque increase rate.

## Description

### TECHNICAL FIELD

The disclosure relates generally to the enhancement of the steering system of a vehicle. In particular aspects, the disclosure relates to a steering system and a vehicle associated. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

It is known to use a steering system comprising a steer wheel so that a driver can control the vehicle and an assistance steer system that correct the direction of the vehicle depending on driving parameters. The assistance steer system uses sensors to correct the driving direction of the vehicle. Nevertheless, when the sensor is faulty or incorrectly interprets the road environment, the assistance steer system can incorrectly adjust the direction of the vehicle without any control from the driver, potentially endangering the driver. The invention aims at improving the capability of the steering assistance system.

### SUMMARY

According to a first aspect of the disclosure, a steering system of a vehicle, the steering system comprising:
- a steer wheel configured to be rotated by a driver to generate a driver torque input,
- an assistance steer system configured to generate an assist torque input to correct the driver torque input, an absolute value of the assist torque input being limited by a dynamic limitation defining a working area, the dynamic limitation defining a base limit and a maximum limit superior to the base limit, so that:
   ∘ the absolute value of the assist torque input is maintained below or equal to the maximum limit,
   ∘ between the base limit and the maximum limit, a torque increase rate of the absolute value of the assist torque input is limited by a limiting rate,
   ∘ below the base limit, there is no limitation on the torque increase rate, and
- a power system configured to steer driving wheels of the vehicle according to a control torque instruction, the control torque instruction being determined from a linear function of the driver torque input and of the assist torque input.

The first aspect of the disclosure may seek to keep the vehicle controllable when the steering assistance system generates assistance torque input incorrectly adjusting the driving direction. A technical benefit may include limiting the increase rate of the torque assistance input so that the driver has enough time to compensate an inadequate assist torque input.

Optionally in some examples, including in at least one preferred example, the limiting rate is constant, and the dynamic limitation further defines an upper transition boundary extending from the base limit to the maximum limit, the upper transition boundary being linearly dependent to time with a slope equal to the limiting rate, so that the assist torque input is maintained below or equal to the upper transition boundary. In some examples, the limiting rate is comprised between 0.5 Newton meter per second and 2 Newton meter per second, and preferably equal to 1 Newton meter per second. A technical benefit may include imposing a maximal linear increase rate of the assist torque input. Such a maximal linear increase rate allows the driver to easily compensate the incorrect assist torque input.

Optionally in some examples, including in at least one preferred example, the base limit is comprised between 3Nm and 6Nm. In some examples, the base limit depends on a speed of the vehicle. A technical benefit may include ensuring that, under normal driving conditions, the action of the assistance steering system is not limited.

Optionally in some examples, including in at least one preferred example, the maximum limit is comprised between 6Nm and 10Nm. In some examples, the maximum limit depends on a speed of the vehicle. A technical benefit may include limiting the action of the assistance steer system so that the assistance steer system will not cause the vehicle to run out of control.

Optionally in some examples, including in at least one preferred example, the linear function of the determination of the control torque instruction is of the form ax+y where a is a gain, x is the driver torque input and y is the assist torque input. In some examples, the steering system comprises a closed loop control system, the linear function of the determination of the control torque instruction being of the form ax+y +b where a is a gain, x is the driver torque input, y is the assist torque input and b a control torque calculated by the closed loop control system. In some examples, the gain is comprised between 0 and 4. In some examples, the gain depends on a speed of the vehicle. A technical benefit may include optimizing the driver torque input to facilitate the driving of the vehicle.

According to a second aspect of the disclosure, a vehicle comprising driving wheels; and a steering system as defined above. The second aspect of the disclosure may seek to keep the vehicle controllable when the assistance steer system generates an assist torque input incorrectly adjusting the driving. A technical benefit may include limiting the increase rate of the assist torque input so that the driver has enough time to compensate an inadequate assist torque input.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a schematic view of a vehicle according to an embodiment of the invention.
**FIG. 2** is an example of a working area of a control torque instruction as a function of the driver torque input.
**FIG. 3** is an example of a curve A of an assist torque input of the vehicle as a function of time, a curve B of an assist torque input of the vehicle as a function of time.

### DETAILED DESCRIPTION

The detailed description set forth below provides information and examples of the disclosed technology with sufficient detail to enable those skilled in the art to practice the disclosure.

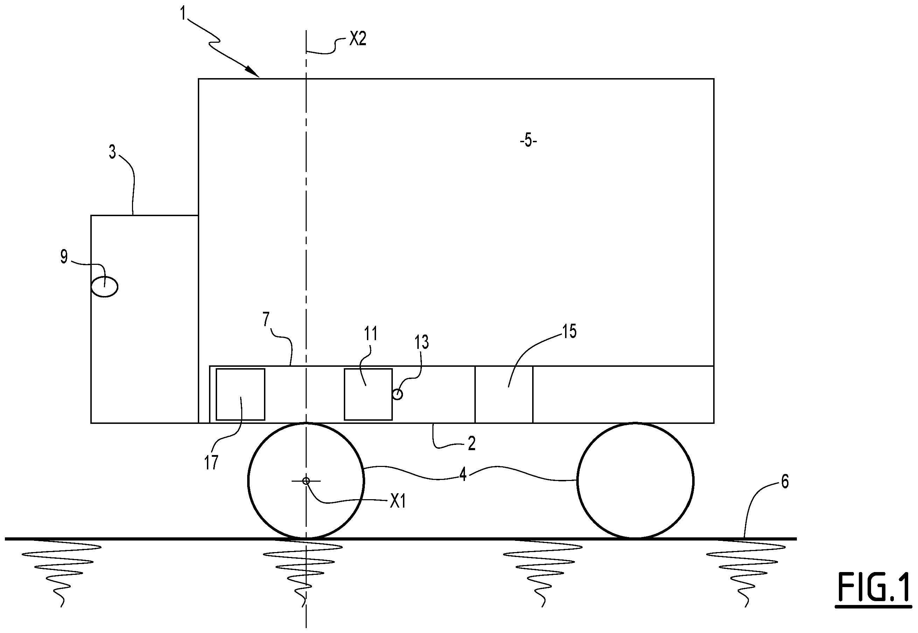

Figure 1 depicts a vehicle 1, comprising a frame 2, a driving cabin 3, a load compartment 5 and a steering system 7 according to an embodiment of the invention.

The driving cabin 3 is supported by the frame 2 and positioned at the front of the vehicle 1. The vehicle 1 is drivable by a driver. The driver inside the driving cabin 3 controls the vehicle 1. Driving wheels 4 are mounted on the frame 2 and are configured to rotate around a first axis X1 to enable the movement of the vehicle 1 on a road 6 and around a second axis X2 perpendicular to the first axis X1 to orientate the vehicle 1.

The steering system 7 comprises a steer wheel 9. The steer wheel 9 is positioned in the driving cabin 3 and is configured to be rotated by the driver. The driver rotating the steer wheel 9 generates a driver torque input. The driver torque input corresponds to a desired torque from the driver to rotate the driving wheels 4 around the second axis with the driver torque input, for instance to follow a curve of the road 6. The driver torque input is positive, the direction of rotation of the driving wheels 4 depending on the direction of rotation of the steer wheel 9.

The steering system 7 comprises an assistance system 11 to generate an assist torque input to correct the driver torque input. The assistance system 11 is connected to at least one sensor 13 of the vehicle 1 configured to measure at least one road parameter. For instance, the assistance system 11 comprises a lane-assist system configured to maintain the vehicle 1 in the lane of the road in which the vehicle 1 is currently driving and to detect lane crossing. In this case, the assist torque input corrects the driver torque input to ensure that the vehicle 1 stays in the current lane. The assistance system 11 can also determine a profile of the road 6, including for instance, straight portions, curve portions, and generates an assist torque input to correct the driver torque input to ensure that the vehicle has a correct trajectory on the road 6. The assist torque input is positive when the assistance steer system 11 increases the driver torque input and the assist torque input is negative when the assistance steer system 11 reduces the driver torque input.

The steering system 7 comprises a power system 15 configured to steer driving wheels 4 according to a control torque instruction. The power system 15 is in this example a hydraulic system, not represented, combined with an engine, not represented.

The steering system 7 also comprises a controller 17 configured to determine the control torque instruction and to provide the control torque instruction to the power system 15.

As a general matter, each of the assistance system 11 and the controller 17 may be a computer or computing system, or similar electronic computing device adapted to manipulate and/or transform parameter represented as physical, such as electronic, quantities within the computing system's registers and/or memories into other parameter similarly represented as physical quantities within the computing system's memories, registers or other such information storage, transmission or display devices.

Each of the assistance system 11 and the controller 17 preferably comprises a processing unit. The terms "processing unit" as disclosed herein should be broadly construed to include any kind of electronic device with data processing circuitry, which includes for example a computer processing device operatively connected to a computer readable medium: e.g. digital signal processor (DSP), a microcontroller, a field programmable gate array (FPGA), and an application specific integrated circuit (ASIC), capable of executing various data processing operations.

It can encompass a single processor or multiple processors, which may be located in the same geographical zone or may, at least partially, be located in different zones and may be able to communicate together.

The computer readable medium is a medium that can be read by the processing unit. The computer readable medium is a medium suitable for storing electronic instructions, and capable of being coupled to a computer system bus.

Such computer readable storage medium is, for instance, a disk, a floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

A computer program is stored in the computer readable storage medium. The computer program comprises one or more stored sequence of program instructions.

The computer program is loadable into the processing unit and adapted to cause execution of a method to control the power system 15 or to generate an assist torque input when the computer program is run by the processing unit.

The controller 17 is configured to receive the driver torque input from the steer wheel 9 and the assist torque input from the assistance steer system 11. The controller 17 is configured to determine the control torque instruction from a linear function of the driver torque input and the assist torque input. Advantageously, the linear function of the determination of the control torque instruction is of the form ax+y where a is a gain, x is the driver torque input and y is the assist torque input.

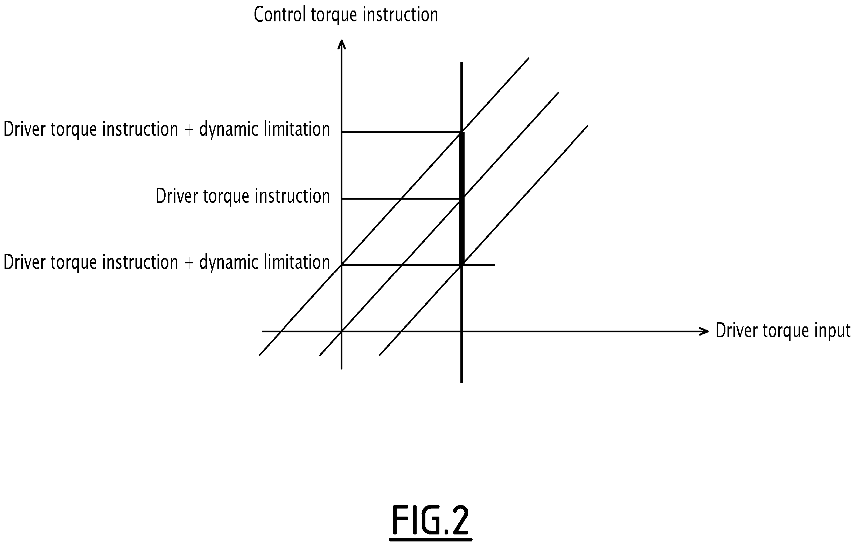

Thus, during the determination of the control torque instruction, the controller 17 adapts the driver torque input. More precisely, the controller 17 multiplies the driver torque input by the gain to obtain a driver torque instruction corresponding to ax in the above linear function. The curve of the driver torque instruction as a function of the driver torque input is represented on figure 2.

Advantageously, the gain is comprised between 0.4 and 3. Advantageously, the gain depends on the speed of the vehicle 1. For instance, at lower speeds, such as during parking, the gain is superior to 1. Thus, the steering system 7 increases the steering angle for a given driver torque input, allowing the vehicle 1 to make tighter turns with less effort from the driver. This makes parking or maneuvering in tight spaces easier. In contrast, at higher speeds, the gain is inferior to 1. Thus, the steering angle is reduced for the same driver torque input, making the vehicle more stable and less sensitive to minor movements of the steering wheel. This improves safety and control on highways or during emergency maneuvers.

During the determination of the control torque instruction, the controller 17 limits an absolute value of the assist torque by a dynamic limitation. The dynamic limitation defines a working area of the control torque instruction around the driver torque instruction, as represented on figure 2. More precisely, the working area is comprised between the driver torque instruction plus the dynamic limitation and the driver torque instruction minus the dynamic limitation. The control torque instruction determined by the controller 17 is comprised in the working area.

The dynamic limitation defines a base limit and a maximum limit, the maximum limit being superior to the base limit. The assist torque input is maintained below or equal to the maximum limit. Advantageously, the base limit is comprised between 3Nm and 6Nm. Advantageously, the maximum limit is comprised between 6Nm and 10Nm.

When the absolute value of the assist torque input is between the base limit and the maximum limit, a torque increase rate of the absolute value of the assist torque input is limited by a limiting rate. In other terms, the assistance steer system can not generate instantly a high assist torque input.

Below the base limit, the torque increase rate is not limited.

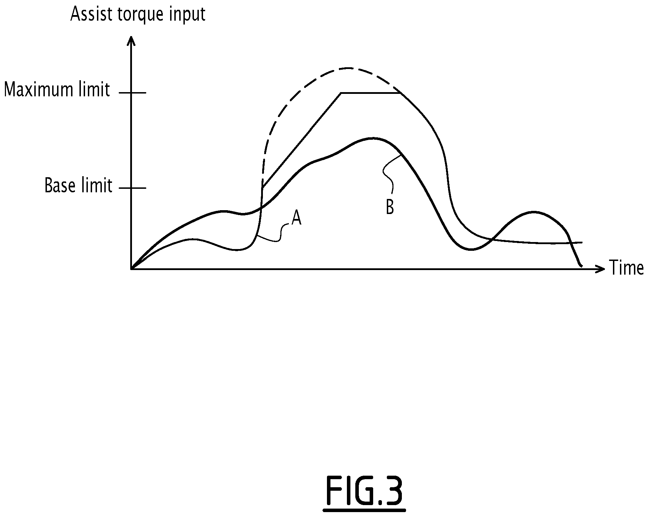

Advantageously, the limiting rate is constant and defines an upper transition boundary from the base limit to the maximum limit. As represented on figure 3, the upper transition boundary is linearly dependent to time and a slope of the upper transition boundary is equal to the constant limiting rate. The assist torque input is maintained below or equal to the upper transition boundary. Advantageously, the limiting rate is comprises between 0.5 Newton meter per second and 2 Newton meter per second, and preferably equal to 1 Newton meter per second.

According to the example of the curve A of figure 3, at the beginning, the assistance steer system 11 requires an assist torque input below the base limit, so there is no limitation of the increase rate for the assist torque input. Once the assistance steer system 11 requires an assist torque input superior to the base limit, the increase rate of the assist torque input is limited by the upper transition boundary and the assist torque input is equal to the upper transition boundary and then equal to the maximum limit. The dotted part of the curve A represented the assist torque input required by the assistance steer system 11 limited by the dynamic limitation and not acceptable.

In the example of the curve B, the assist torque input required by the assistance steer system 11 is always inferior to the maximum limit and, when the assist torque input is between the base limit and the maximum limit, the increase rate is inferior to the limiting rate. Thus, in this case, the assist torque input is below the upper transition boundary and the maximum limit so that the dynamic limitation does not restrict the assist torque input required by the assistance steer system 11.

Advantageously, the limiting rate, the base limit and the maximum limit depend on the speed of the vehicle 1 for the same reasons explained above.

Thanks to the dynamic limitation, in case the sensor 13 is faulty and the assistance steer system 11 generates an inadequate assist torque input which is not in line with the driving parameters, such as the curve of the road, the others vehicles around the vehicle 1 or the position of the vehicle 1 in the lane, the driver can adjust his driver torque input to correct the inadequate assist torque input. Indeed, the limiting rate and the maximum limit allow avoiding the assistance steer system 11 to run the vehicle out of the control of the driver. More precisely, the limiting rate is configured so that the increase of the absolute value of the assist torque input is slower than the human reaction of the driver, in order to let enough time to the driver to react in case of malfunction. Nevertheless, the dynamic limitation does not limit too much the assist torque input so that the action of the assistance steer system 11 is efficient when the sensor 13 is not faulty, as it is represented in the case of the curve B of figure 3. In other terms, the dynamic limitation will limit the action of the assistance steer system 13 only when the sensor 13 is faulty, preventing the vehicle 1 from going out of control to preserve the safety of the driver.

In a variant, not shown, the steering system 7 comprises a closed loop control system. The closed loop control is configured to analyze the evolution of the torque control instruction. The closed loop control, depending on the evolution of the torque control instruction, is configured to adapt the linear function of the determination of the control torque instruction. More precisely, the linear function of the determination of the control torque instruction is of the form ax+y +b where a is a gain, x is the driver torque input, y is the assist torque input and b a control torque calculated by the closed loop control system. The control torque adapts the function to route parameters deduced from the analyses of the evolution of the torque control instruction by the closed loop control system. The route parameters is, for instance, the driver's conduct or/and the environment of the vehicle such as the weather or the type of the road.

**Example 1:** A steering system (7) of a vehicle (1), the steering system (7) comprising:
- a steer wheel (9) configured to be rotated by a driver to generate a driver torque input,
- an assistance steer system (11) configured to generate an assist torque input to correct the driver torque input, an absolute value of the assist torque input being limited by a dynamic limitation defining a working area, the dynamic limitation defining a base limit and a maximum limit superior to the base limit, so that:
   ∘ the absolute value of the assist torque input is maintained below or equal to the maximum limit,
   ∘ between the base limit and the maximum limit, a torque increase rate of the absolute value of the assist torque input is limited by a limiting rate,
   ∘ below the base limit, there is no limitation on the torque increase rate, and
- a power system (15) configured to steer driving wheels (4) of the vehicle according to a control torque instruction, the control torque instruction being determined from a linear function of the driver torque input and of the assist torque input.

**Example 2:** The steering system (7) of the example 1, wherein the limiting rate is constant, and the dynamic limitation further defines an upper transition boundary extending from the base limit to the maximum limit, the upper transition boundary being linearly dependent to time with a slope equal to the limiting rate, so that the assist torque input is maintained below or equal to the upper transition boundary.

**Example 3:** The steering system (7) of the example 2, wherein the limiting rate is comprised between 0.5 Newton meter per second and 2 Newton meter per second, and preferably equal to 1 Newton meter per second.

**Example 4:** The steering system (7) of any one of the previous examples, wherein the base limit is comprised between 3Nm and 6Nm.

**Example 5:** The steering system (7) of any one of the previous examples, wherein the base limit depends on a speed of the vehicle.

**Example 6:** The steering system (7) of any one of the previous examples, wherein the maximum limit is comprised between 6Nm and 10Nm.

**Example** 7: The steering system (7) of any one of the previous examples, wherein the maximum limit depends on a speed of the vehicle (1).

**Example 8:** The steering system (7) of any one of the previous examples, wherein the linear function of the determination of the control torque instruction is of the form ax+y where a is a gain, x is the driver torque input and y is the assist torque input.

**Example 9:** The steering system (7) of any one of the examples 1 to 7, comprising a closed loop control system, the linear function of the determination of the control torque instruction being of the form ax+y +b where a is a gain, x is the driver torque input, y is the assist torque input and b a control torque calculated by the closed loop control system

**Example 10:** The steering system (7) of any one of the examples 8 or 9, wherein the gain is comprised between 0 and 4.

**Example 11:** The steering system (7) of any one of the examples 8 to 10, wherein the gain depends on a speed of the vehicle.

**Example 12:** A vehicle (1) comprising:
- driving wheels (4); and
- a steering system (7) according to any one of the previous examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A steering system (7) of a vehicle (1), the steering system (7) comprising:
- a steer wheel (9) configured to be rotated by a driver to generate a driver torque input,
- an assistance steer system (11) configured to generate an assist torque input to correct the driver torque input, an absolute value of the assist torque input being limited by a dynamic limitation defining a working area, the dynamic limitation defining a base limit and a maximum limit superior to the base limit, so that:
∘ the absolute value of the assist torque input is maintained below or equal to the maximum limit,
∘ between the base limit and the maximum limit, a torque increase rate of the absolute value of the assist torque input is limited by a limiting rate,
∘ below the base limit, there is no limitation on the torque increase rate, and
- a power system (15) configured to steer driving wheels (4) of the vehicle according to a control torque instruction, the control torque instruction being determined from a linear function of the driver torque input and of the assist torque input.

2. The steering system (7) according to claim 1, wherein the limiting rate is constant, and the dynamic limitation further defines an upper transition boundary extending from the base limit to the maximum limit, the upper transition boundary being linearly dependent to time with a slope equal to the limiting rate, so that the assist torque input is maintained below or equal to the upper transition boundary.

3. The steering system (7) according to claim 2, wherein the limiting rate is comprised between 0.5 Newton meter per second and 2 Newton meter per second, and preferably equal to 1 Newton meter per second.

4. The steering system (7) according to any one of the previous claims, wherein the base limit is comprised between 3Nm and 6Nm.

5. The steering system (7) according to any one of the previous claims, wherein the base limit depends on a speed of the vehicle (1).

6. The steering system (7) according to any one of the previous claims, wherein the maximum limit is comprised between 6Nm and 10Nm.

7. The steering system (7) according to any one of the previous claims, wherein the maximum limit depends on a speed of the vehicle (1).

8. The steering system (7) according to any one of the previous claims, wherein the linear function of the determination of the control torque instruction is of the form ax+y where a is a gain, x is the driver torque input and y is the assist torque input.

9. The steering system (7) according to any one of claims 1 to 7, comprising a closed loop control system, the linear function of the determination of the control torque instruction being of the form ax+y +b where a is a gain, x is the driver torque input, y is the assist torque input and b a control torque calculated by the closed loop control system.

10. The steering system according to claim 8 or 9, wherein the gain is comprised between 0 and 4.

11. The steering system (7) of any one of the claims 8 to 10, wherein the gain depends on a speed of the vehicle (1).

12. A vehicle (1) comprising:
- driving wheels (4); and
- a steering system (7) according to any one of the preceding claims.

## Amended claims

### Amended claims in accordance with Rule 137(2) EPC.

1. A steering system (7) of a vehicle (1), the steering system (7) comprising:
- a steer wheel (9) configured to be rotated by a driver to generate a driver torque input,
- an assistance steer system (11) configured to generate an assist torque input to correct the driver torque input, and
- a power system (15) configured to steer driving wheels (4) of the vehicle according to a control torque instruction, the control torque instruction being determined from a linear function of the driver torque input and of the assist torque input;
**characterized in that** an absolute value of the assist torque input is limited by a dynamic limitation defining a working area, the dynamic limitation defining a base limit and a maximum limit superior to the base limit, so that:
- the absolute value of the assist torque input is maintained below or equal to the maximum limit,
- between the base limit and the maximum limit, a torque increase rate of the absolute value of the assist torque input is limited by a limiting rate,below the base limit, there is no limitation on the torque increase rate.

2. The steering system (7) according to claim 1, wherein the limiting rate is constant, and the dynamic limitation further defines an upper transition boundary extending from the base limit to the maximum limit, the upper transition boundary being linearly dependent to time with a slope equal to the limiting rate, so that the assist torque input is maintained below or equal to the upper transition boundary.

3. The steering system (7) according to claim 2, wherein the limiting rate is comprised between 0.5 Newton meter per second and 2 Newton meter per second, and preferably equal to 1 Newton meter per second.

4. The steering system (7) according to any one of the previous claims, wherein the base limit is comprised between 3Nm and 6Nm.

5. The steering system (7) according to any one of the previous claims, wherein the base limit depends on a speed of the vehicle (1).

6. The steering system (7) according to any one of the previous claims, wherein the maximum limit is comprised between 6Nm and 10Nm.

7. The steering system (7) according to any one of the previous claims, wherein the maximum limit depends on a speed of the vehicle (1).

8. The steering system (7) according to any one of the previous claims, wherein the linear function of the determination of the control torque instruction is of the form ax+y where a is a gain, x is the driver torque input and y is the assist torque input.

9. The steering system (7) according to any one of claims 1 to 7, comprising a closed loop control system, the linear function of the determination of the control torque instruction being of the form ax+y +b where a is a gain, x is the driver torque input, y is the assist torque input and b a control torque calculated by the closed loop control system.

10. The steering system according to claim 8 or 9, wherein the gain is comprised between 0 and 4.

11. The steering system (7) of any one of the claims 8 to 10, wherein the gain depends on a speed of the vehicle (1).

12. A vehicle (1) comprising:
- driving wheels (4); and
- a steering system (7) according to any one of the preceding claims.
